# EUROPEAN PATENT SPECIFICATION

(11) **EP 0 425 042 B1**
(45) Date of publication and mention of the grant of the patent: **15.02.1995**
(21) Application number: 90202815.8
(22) Date of filing: 22.10.1990
(51) Int. Cl.: G11B 7/08, G05B 13/02

(54) **Method of and device for detecting parameters of a digitally controllable processing circuit for controlling the scanning of a data carrier**
Verfahren und Anordnung zum Detektieren von Parametern eines digital steuerbaren Prozesskreises zum Steuern der Abtastung eines Datenträgers
Procédé et dispositif pour détecter des paramètres d'une chaîne de processus à commande numérique pour commander l'exploration d'un support de données

(30) Priority: 25.10.1989 NL 8902640
(43) Date of publication of application: 02.05.1991
(73) Proprietor: Philips Electronics N.V., 5621 BA Eindhoven (NL)
(72) Inventor: Akkermans, Antonius Hermanus Maria, NL-5656 AA Eindhoven (NL)
(74) Representative: Groenendaal, Antonius Wilhelmus Maria

(56) References cited:
- EP-A- 0 155 077
- EP-A- 0 225 258
- WO-A-86/04178

## Description

The invention relates to a method of detecting one or more parameters of a digitally controllable processing circuit for controlling the scanning of a data carrier, employing excitation means for exciting the processing circuit with a detection signal having known properties and detection means for detecting the response of the processing circuit to the applied detection signal.

By comparing, for example, the amplitude of the detected response signal with the amplitude of the applied detection signal or with a fixed reference signal it is possible to obtain a measure of the gain of the processing circuit. It is possible to derive, for example, a measure of an offset error from the energy content of the response signal.

A method of the type defined above is known per se from European Patent Application EP-A-0,021,510 and United States Patent Specification US-A-4,471,477 and US-A-4,482,989, which both relate to devices for optically scanning a data carrier.

In said European Patent Specification the focusing system of the optical scanning circuit constitutes the digitally controlled processing circuit, and the two United States Patent Specifications relate to the digital control of the relative positioning system of the optical scanning circuit and the data carrier as it is being scanned.

For controlling the two processing circuits use is made of the information signal generated by the optical scanning circuit and/or of one or more optically generated measurement signals. The performance of the optical scanning circuit and its associated control circuits depends inter alia on optical, mechanical and electrical tolerances and other imperfections, which may give rise to instabilities or control errors. An asymmetrical intensity distribution in the optical scanning circuit may give rise to an offset error, while for example the properties of the data carrier itself dictate the strength of the information signal and the measurement signals, which affects the overall gain of the control circuits and hence the bandwidth of these circuits. For example, if the control bandwidth is too large this may lead to unstable control of the scanning circuit. Therefore, it is essential to aim at control circuits whose properties and performance are as constant as possible.

In the said prior-art scanning devices the method defined in the opening paragraph inter alia provides information about deviations from the desired gain and offset errors in the optical scanning circuit. In operation the focusing system and the positioning system are therefore each excited continuously with a sinusoidal detection signal of known frequency and amplitude. The amplitude is then, for example, adapted to the dimensions of the data areas of the carrier to be scanned, while the frequency limits are dictated specifically by the (mechanical) drive means employed in the relevant process. The response to the applied sinusoidal detection signal can be detected from the control signals of the control circuits by means of techniques which are known per se, such as amplitude of phase detection.

The choice of the frequency of the detection signal is dictated mainly by the requirement of a minimal heat development and hence a minimal electric power consumption, which is of particular importance for compact portable scanning devices powered by power sources such as batteries or accumulators. It has been found that in the case of a typical detection signal having a frequency of the order of magnitude of 200 Hz already about 80% of the electric power consumed by for example the positioning system is intended for the detection signal.

It is possible to demonstrate that the electric power for the detection signal is directly proportional to the fourth power of the frequency of the detection signal. Therefore, a comparatively low frequency is to be preferred from the point of view of power consumption. However, it has been found that in the case of, for example, portable scanning devices comprising a separate audio reproduction system acoustic feedback occurs, which is most pronounced in the range between 100 and 400 Hz. In particular in situations with comparatively high sound levels the control signals of the control circuits may be disturbed to an undesirable extent, regardless of the use of amplitude or phase detection.

It is an object of the invention to improve the method defined in the opening paragraph in such a manner that the required detection of the parameters can be effected by means of a detection signal of comparatively high frequency without the electric power consumption being significantly higher in comparison with a detection signal of lower frequency. Obviously, it is preferred to reduce the electric power consumption.

In accordance with the invention this is achieved in that the processing circuit is excited intermittently with the detection signal.

The invention is based on the recognition of the fact that the process of scanning a data carrier is a process which varies comparatively slowly, which in principle does not require continuous process control, and that in digitally controlled processing circuits the gain and offset setting do not "leak away" when the control circuit is inoperative.

It will be obvious that by intermittently or discontinuously exciting the processing circuit the overall power consumption and the undesired development of heat can be reduced, so that it is possible to select a comparatively high detection frequency outside the range in which spurious signals occur. In the case of the afore-mentioned portable optical scanning devices it is possible, for example, to use a detection frequency of the order of magnitude of 500 Hz, which reduces the susceptibility of the control circuits to said acoustic feedback.

Another advantage of a comparatively high excitation frequency is that by the use of phase detection a more sensitive detection of the response to the applied detection signal can be achieved than in the case that amplitude detection is used. Phase detection can be realised simply by means of the synchronous detection technique, which is known per se and which is also applied for the detection of offset errors. The excitation signal may be applied, for example, periodically.

In principle the method in accordance with the invention can be applied to any adaptive digitally controllable processing system employing a known external detection signal for the identification of system parameters.

A further advantage of the method in accordance with the invention resides in the fact that the excitation means and the detection means may be common to a plurality of processing circuits for detecting one or more parameters of said circuits. This means that for controlling a plurality of processing circuits only a minimal number of additional circuit components and, in the case of software-controlled components, a minimum of additional software is required.

The invention also relates to a device for optically scanning a data carrier, which advantageously utilizes the method in accordance with the invention, which device comprises a radiation source for producing a scanning beam, focusing means for aiming the scanning beam at the data carrier, drive means for producing a relative movement between the data carrier and the scanning beam for the purpose of scanning the data carrier, read means for detecting the information in the scanning beam as a result of the scanning of the data carrier, means for generating a measurement signal which is representative of the deviation between the instantaneous location where the scanning beam is incident on the data carrier and the desired scanning point, first and second control means responsive to the measurement signal to generate a first control signal for the focusing means and a second control signal for the drive means respectively, in order to reduce said deviation, the measurement means, the first control means and the focusing means forming part of a digitally controllable first processing circuit, the measurement means, the second control means and the drive means forming part of a digitally controllable second processing circuit, and in addition comprising excitation means for exciting at least one of the processing circuits with a detection signal, detection means for detecting the response of the relevant processing circuit to the detection signal and means associated with at least one of the control means and responsive to the detection signal to generate a correction signal for correcting said deviation, characterized in that there are provided first switching means, coupled to the excitation means, for intermittently exciting the relevant processing circuit with the detection signal.

A further embodiment of the device in accordance with the invention which is advantageous for reasons of circuit engineering is characterized in that there are provided second switching means for coupling the excitation means, the detection means and the means for generating a correction signal to the first or the second processing circuit.

As described hereinbefore, the performance of the optical scanning circuit and the associated control circuits depends on tolerances and other imperfection, inter alia the properties of the data carrier to be scanned itself, which necessitates adaptive control of the properties of the processing circuits, such as the gain and the bandwidth.

In general, the properties, for example the reflectivity, of a data carrier in the area to be scanned will be constant. Usually, a one-time adjustment of the focusing system is then adequate.

The preferred embodiment of the device in accordance with the invention is therefore characterized in that the switching means are adapted to couple the excitation means, the detection means and the means for generating the correction signal to the first processing circuit during starting of the device, in order to adjust the focusing means.

In another embodiment of the device in accordance with the invention an optimum correction of the scanning system is achieved in that the switching means are adapted to couple the excitation means, the detection means and the means for generating the correction signal alternately to the first and the second processing circuit. This embodiment effectively reduces the influence of local disturbances in, for example, the reflectivity of the data carrier as a result of stains and the like.

When one or both processing circuits is or are excited intermittently with a detection signal whose frequency is twice as high as in the prior-art, in which one or more of the processing circuits is excited continuously, the electric power consumption can be reduced, in accordance with a further embodiment of the device in accordance with the invention, if the ratio between the on-interval and the off-interval of the first switching means is equal to or larger than 0.05.

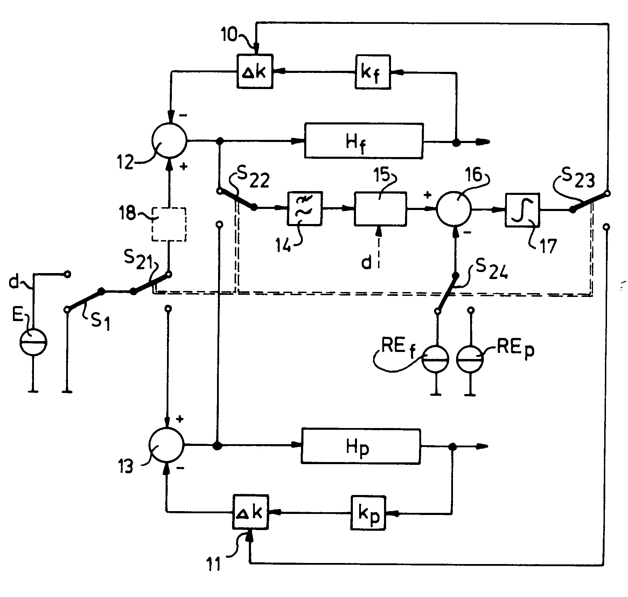

The invention will be illustrated hereinafter by a description of its use in an optical scanning device with reference to the drawing.

The drawing shows the circuit diagram of a digital control circuit, based on the inventive method, for the optical scanning system of a device for optically scanning a data carrier, for example a disc-shaped data carrier as described in said European Patent Application EP-A-0,021,510 and the two United States Patent Specifications US-A-4,471,477 and US-A-4,482,989, herewith incorporated by reference.

On practical prior-art disc-shaped data carriers the information to be scanned is arranged in tracks in accordance with a spiral or a concentric pattern. The properties of the disc are such that an incident scanning beam is reflected. The information to be scanned is represented by the presence or absence of series of pits in the disc surface to be scanned.

In general, the scanning beam is generated by means of a radiation source such as a solid-state laser or a helium-neon laser. The light beam produced by this radiation source is processed to form a scanning beam of the desired cross-section via adjustable focusing means comprising one or more lenses. For scanning the said tracks the scanning system is constructed to be movable in a radial direction relative to the disc surface via actuating and positioning means.

The scanning beam reflected from the data carrier contains information about the presence of absence of a pit in the disc surface, which information can be processed by means of a read detector and processing means in accordance with the prior art.

In practice the data carriers have a spiral information track having a width of approximately 0.6 »m and a track pitch of 1.6 »m. The average depth of the pits is approximately 0.12 »m. For scanning such an information structure the scanning beam should accurately follow the information track and should be accurately in focus. For the purpose of controlling the focusing and positioning means there are provided means which generate a measurement signal which is representative of the deviation between the instantaneous location where the scanning beam is incident on the data carrier and the desired scanning point. In accordance with the prior art these means may comprise two further detectors arranged in the same plane as the read detector for detecting the reflected scanning beam. As is known from the prior art, a measurement signal for controlling the positioning and focusing means can be derived from the light which is incident on the two further detectors.

As already stated in the introductory part, the focusing and positioning means are subject to optical, mechanical and electrical tolerances and their operation further depends on the properties of the data carrier to be scanned, such as the reflectivity, the depth of the pits and the like. As a result of these deviations the gain of the control circuits for the focusing and positioning means and hence the bandwidth will vary, as comprehensively described and illustrated in the two afore-mentioned United States Patent Specifications. Bandwidth variations may give rise to instabilities in the control of the optical scanning circuit. In particular deviations as a result of the properties of the data carrier to be scanned require the adaptive control of the desired control bandwidth.

The circuit diagram shown in the drawing is based on the prior-art method, in which for adaptively determining the gain and the offset errors of a processing circuit this circuit is excited with an excitation signal, a measure of the relevant parameters being derived from the response to this signal in order to correct these parameters when necessary.

The block H_{f} represents the transfer function of the focusing means and the block Hₚ represents the transfer function of the positioning means of the scanning device. The measurement signal obtained by means of said further detectors provides a measure of the overall gain of the control circuits for the focusing and positioning means, which is represented by means of the blocks k_{f} and kₚ in the Figure. For controlling the gain of the control circuits the feedback loops of the relevant processing circuits further include the blocks designated Δk, which blocks each have a control input 10 and 11 respectively. As illustrated in the two afore-mentioned United States Patent Specifications, the bandwidth of the relevant processing circuit can be adjusted by thus varying the gain.

For determining the desired parameters, such as for example the overall gain of a processing circuit, there are provided excitation means in the form of a signal source E, which supplies, for example, a sinusoidal detection signal d of known properties, i.e. amplitude and frequency, for exciting the relevant processing circuits H_{f} and Hₚ respectively. The detection signal applied to a processing circuit via an adder 12 and 13 respectively is further applied to detection means comprising a series arrangement of a low-pass filter 14, a detection circuit 15, a comparator 16 and an integrator 17. The detection circuit 15 may be a circuit for amplitude or phase detection, known per se, which in the last-mentioned case comprises an input for receiving the detection signal d, as is indicated by a single broken line in the Figure. The signal from the detection circuit circuit 15 is applied to an input (+) of the comparator 16, whose other input (-) receives a suitable reference signal from a reference source RE_{f} or REₚ respectively. The signal supplied by the comparator 16 is integrated by means of the integrator 17, which results in a control signal for controlling the gain and hence the control bandwidth of the relevant processing circuit.

By the use of digitally operating components it is possible to ensure that once the gain or offset correction has been adjusted it is maintained and does not "leak away" as in the case of analog components.

In accordance with the invention there are provided switching means S₁ and S₂ the last-mentioned means comprising four associated switching elements S₂₁, S₂₂, S₂₃, and S₂₄ in the Figure, which elements are coupled as indicated by means of double broken lines. In the Figure the relevant switching means are represented as mechanical switches. It is obvious that in practice digital switching means or principles are employed, which may also include the implementation of switching functions by means of software.

With the aid of the first switching means S₁ the detection signal d from the signal source E can be applied intermittently or periodically. The detection signal can be applied to the (+) input of the adder 12 and 13 respectively via the second switching means, in the present case S₂₁. The switch S₂₂ assigns the detection means to the relevant processing circuit. The appropriate reference signal is selected by means of the switch S₂₄, while the signal on the output of the integrator 17 is applied either to the input 10 of the means Δk for the gain control of one processing circuit or to the input 11 of the means Δk for the gain control of the other processing circuit via the switch S₂₃. To adapt the amplitude of the detection signal d to the individual processing circuits separate means may be provided, such as the block 18 shown in broken lines. This block 18 may be, for example, an attenuator.

The detection signal is applied to the processing circuit H_{f} or to the processing circuit Hₚ with the aid of the second switching means S₂. If the data carrier to be scanned has substantially optically homogeneous properties over its entire surface to be scanned a one-time adjustment of the focusing means upon starting of the scanning process is adequate. Subsequently, during scanning of the data carrier the detection means may then be assigned continuously to the positioning circuit for accurately following the information track on the data carrier with the scanning beam.

It will be appreciated that by suitably arranging the detection means and the excitation means in accordance with the invention an adaptive optimum setting of the focusing means and the positioning means with a minimum of separate expensive components can be achieved. Intermittently switching the excitation means, in the present case the signal source E, enables a detection signal d of the desired high frequency to be employed, resulting in an equal or even reduced power consumption as compared with the prior-art optical scanning devices.

## Claims

1. A method of detecting one or more parameters of a digitally controllable processing circuit (H_{f}, Hₚ) for controlling the scanning of a data carrier, employing excitation means (E) for exciting the processing circuit with a detection signal (d) having known properties and detection means (14, 15, 16, 17) for detecting the response of of the processing circuit to the applied detection signal, characterized in that the processing circuit (H_{f}, Hₚ) is excited intermittently with the detection signal (d).

2. A method as claimed in Claim 1, characterized in that the processing circuit (H_{f}, Hₚ) is periodically excited with the detection signal (d).

3. A method as claimed in Claim 1 or 2, characterized in that the excitation means (E) and the detection means (14, 15, 16, 17) are common to a plurality of separate processing circuits (H_{f}, Hₚ) for detecting one or more parameters of said circuits.

4. A device for optically scanning a data carrier, comprising a radiation source for producing a scanning beam, focusing means for aiming the scanning beam at the data carrier, drive means for producing a relative movement between the data carrier and the scanning beam for the purpose of scanning the data carrier, read means for detecting the information in the scanning beam as a result of the scanning of the data carrier, means for generating a measurement signal which is representative of the deviation between the instantaneous location where the scanning beam is incident on the data carrier and the desired scanning point, first and second control means responsive to the measurement signal to generate a first control signal for the focusing means and a second control signal for the drive means respectively in order to reduce said deviation, the measurement means, the first control means and the focusing means form part of a digitally controllable first processing circuit (H_{f}), the measurement means, the second control means and the drive means form part of a digitally controllable second processing circuit (Hₚ) and in addition comprising excitation means (E) for exciting at least one of the processing circuits (H_{f}, Hₚ) with a detection signal (d), detection means (14, 15, 16, 17) for detecting the response of the relevant processing circuit (H_{f}, Hₚ) to the detection signal (d), and means associated with at least one of the control means and responsive to the detection signal to generate a correction signal for correcting said deviation being characterized in that there are provided first switching means (S₁), coupled to the excitation means (E) for intermittently exciting the relevant processing circuit (H_{f}, Hₚ) with the detection signal (d).

5. A device as claimed in Claim 4, characterized in that there are provided second switching means (S₂; S₂₁, S₂₂, S₂₃, S₂₄) for coupling the excitation means (E), the detection means (14, 15, 16, 17) and the means for generating a correction signal to the first (H_{f}) or to the second processing circuit (Hₚ).

6. A device as claimed in Claim 5, characterized in that the excitation means (E) comprise adjustment means (18) for adjusting the amplitude of the detection signal.

7. A device as claimed in Claim 5 or 6, characterized in that the switching means (S₁, S₂) are adapted to couple the excitation means (E), the detection means (14, 15, 16, 17) and the means for generating the correction signal to the first processing circuit during starting of the device, in order to adjust the focusing means.

8. A device as claimed in Claim 5, 6, or 7, characterized in that the switching means (S₁, S₂) are adapted to couple the excitation means (E), the detection means (14, 15, 16, 17) and the means for generating the correction signal alternately to the first and the second processing circuit.

9. A device as claimed in any one or several of the Claims 4 to 8, characterized in that the ratio between the on-interval and the off-interval of the first switching means (S₁) is equal to or larger than 0.05.

## Patentansprüche

1. Verfahren des Detektierens eines oder mehrerer Parameter einer digital steuerbaren Verarbeitungsschaltung (H_{f}, Hₚ) zur Steuerung des Abtasten eines Datenträgers, unter Verwendung von Erregermitteln (E) zum Erregen der Verarbeitungsschaltung mit einem Detektionssignal, das bekannte Eigenschaften hat, und Detektionsmitteln (14, 15, 16, 17) zum Detektieren der Antwort der Verarbeitungsschaltung auf das zugeführte Detektionssignal, dadurch gekennzeichnet, daß die Verarbeitungsschaltung (Hf, Hₚ) intermittierend mit dem Detektionssignal (d) erregt wird.

2. Verfahren nach Anspruch 1, dadurch gekennzeichnet, daß die Verarbeitungsschaltung (H_{f}, Hₚ) periodisch mit dem Detektionssignal (d) erregt wird.

3. Verfahren nach Anspruch 1 oder 2, dadurch gekennzeichnet, daß die Erregermittel (E) und die Detektionsmittel (14, 15, 16, 17) für mehrere getrennte Verarbeitungsschaltungen (H_{f}, Hₚ) gemeinsam eingesetzt werden, um einen oder mehr Parameter der genannten Schaltungen zu detektieren.

4. Einrichtung zum optischen Abtasten eines Datenträgers, mit einer Strahlungsquelle zum Liefern eines Abtaststrahlenbündels, Fokussierungsmitteln zum Richten des Abtaststrahlenbündels auf den Datenträger, Antriebsmitteln zum Bewirken einer relativen Bewegung zwischen dem Datenträger und dem Abtaststrahlenbündel, um den Datenträger abzutasten, Lesemitteln zum Detektieren der Information im Abtaststrahlenbündel als Folge des Abtastens des Datenträgers, Mitteln zum Erzeugen eines Meßsignals, das repräsentativ für die Abweichung des momentanen Ortes des Auftreffens des Abtaststrahlenbündels auf den Datenträger vom gewünschten Abtastpunkt ist, mit auf das Meßsignal ansprechenden ersten und zweiten Steuerungsmitteln zur Erzeugung eines ersten Steuersignals für die Fokussierungsmittel bzw. eines zweiten Steuersignals für die Antriebsmittel, um die genannte Abweichung zu verringern, wobei die Meßmittel, die ersten Steuerungsmittel und die Fokussierungsmittel Teil einer digital steuerbaren ersten Verarbeitungsschaltung (H_{f}) sind, die Meßmittel, die zweiten Steuerungsmittel und die Antriebsmittel Teil einer digital steuerbaren zweiten Verarbeitungsschaltung (Hₚ) sind, und außerdem mit Erregermitteln (E) zum Erregen mindestens einer der Verarbeitungsschaltungen (H_{f}, Hₚ) mit einem Detektionssignal (d), Detektionsmitteln (14, 15, 16, 17) zum Detektieren der Antwort der betreffenden Verarbeitungsschaltung (H_{f}, Hₚ) auf das Detektionssignal (d) und mit zu mindestens einem der Steuerungsmittel gehörenden und auf das Detektionssignal ansprechenden Mitteln, um ein Korrektursignal zum Korrigieren der genannten Abweichung zu erzeugen, dadurch gekennzeichnet, daß zum intermittierenden Erregen der betreffenden Verarbeitungsschaltung (H_{f}, Hₚ) mit dem Detektionssignal (d) mit den Erregermitteln (E) gekoppelte erste Schaltmittel (S₁) vorgesehen sind.

5. Einrichtung nach Anspruch 4, dadurch gekennzeichnet, daß zweite Schaltmittel (S₂; S₂₁, S₂₂, S₂₃, S₂₄) vorgesehen sind, um die Erregermittel (E), die Detektionsmittel (14, 15, 16, 17) und die Mittel zum Erzeugen eines Korrektursignals mit der ersten (H_{f}) oder der zweiten Verarbeitungsschaltung (Hₚ) zu koppeln.

6. Einrichtung nach Anspruch 5, dadurch gekennzeichnet, daß die Erregermittel (E) Einstellmittel (18) umfassen, um die Amplitude des Detektionssignals einzustellen.

7. Einrichtung nach Anspruch 6, dadurch gekennzeichnet, daß die Schaltmittel (S₁, S₂) geeignet sind, die Erregermittel (E), die Detektionsmittel (14, 15, 16, 17) und die Mittel zum Erzeugen des Korrektursignals beim Starten der Einrichtung mit der ersten Verarbeitungsschaltung zu koppeln, um die Fokussierungsmittel einzustellen.

8. Einrichtung nach Anspruch 5, 6 oder 7, dadurch gekennzeichnet, daß die Schaltmittel (S₁, S₂) geeignet sind, die Erregermittel (E), die Detektionsmittel (14, 15, 16, 17) und die Mittel zum Erzeugen des Korrektursignals abwechselnd mit der ersten und der zweiten Verarbeitungsschaltung zu koppeln.

9. Einrichtung nach einem oder mehreren der Ansprüche 4 bis 8, dadurch gekennzeichnet, daß das Verhältnis des Einschaltintervalls zum Ausschaltinnervall der ersten Schaltmittel (S₁) gleich oder größer als 0,05 ist.

## Revendications

1. Procédé pour détecter un ou plusieurs paramètres d'un circuit de traitement à commande numérique (H_{f}, Hₚ) pour la commande du balayage d'un support de données, utilisant des moyens d'excitation (E) pour exciter le circuit de traitement avec un signal de détection (d) présentant des propriétés connues et des moyens de détection (14, 15, 16, 17) pour détecter la réponse du circuit de traitement au signal de détection appliqué, caractérisé en ce que le circuit de traitement (H_{f}, Hₚ) est excité de façon intermittente avec le signal de détection (d).

2. Procédé selon la revendication 1, caractérisé en ce que le circuit de traitement (H_{f}, Hₚ) est excité périodiquement avec le signal de détection (d).

3. Procédé selon la revendication 1 ou 2, caractérisé en ce que les moyens d'excitation (E) et les moyens d'excitation (14, 15, 16, 17) sont communs à plusieurs circuits de traitement séparés (H_{f}, Hₚ) pour la détection d'un ou de plusieurs paramètres desdits circuits.

4. Dispositif pour le balayage optique d'un support de données, comprenant une source de rayonnement pour délivrer un faisceau de balayage, des moyens de focalisation pour diriger le faisceau de balayage vers le support de données, des moyens d'entraînement pour fournir un mouvement relatif entre le support de données et le faisceau de balayage pour le balayage du support de données, des moyens de lecture pour détecter l'information dans le faisceau de balayage par suite du balayage du support de données, des moyens pour engendrer un signal de mesure qui est représentatif pour la déviation entre la position momentanée où le faisceau de balayage parvient sur le support de données et le point de balayage désiré, des premiers et deuxièmes moyens de commande sensibles au signal de mesure pour engendrer un premier signal de commande pour les moyens de focalisation et un deuxième signal de commande pour les moyens d'entraînement afin de réduire ladite déviation, les moyens de mesure, les premiers moyens de commande et les moyens de focalisation faisant partie d'un premier circuit de traitement à commande numérique (H_{f}), les moyens de mesure, les deuxièmes moyens de commande et les moyens d'entraînement faisant partie d'un deuxième circuit de traitement à commande numérique (Hₚ) et comportant de plus des moyens d'excitation (E) pour exciter au moins l'un des circuits de traitement (H_{f}, Hₚ) avec un signal de détection (d), des moyens de détection (14, 15, 16, 17) pour détecter la réponse du circuit de traitement en question (H_{f}, Hₚ) au signal de détection (d) et des moyens associés avec au moins l'un des moyens de commande et sensibles au signal de détection pour engendrer un signal de correction pour corriger ladite déviation, caractérisé en ce qu'il est prévu des premiers moyens de commutation (S₁) couplés aux moyens d'excitation (E) pour exciter de façon intermittente le circuit de traitement en question (H_{f}, Hₚ) avec le circuit de détection (d).

5. Dispositif selon la revendication 4, caractérisé en ce qu'il est prévu des deuxièmes moyens de commutation (S₂, S₂₁, S₂₂, S₂₃, S₂₄) pour coupler les moyens d'excitation (E), les moyens de détection (14, 15, 16, 17) et les moyens générateurs d'un signal de correction au premier circuit de traitement (H_{f}) ou au deuxième circuit de traitement (Hₚ).

6. Dispositif selon la revendication 5, caractérisé en ce que les moyens d'excitation (E) sont munis de moyens de réglage (18) pour régler l'amplitude du signal de détection.

7. Dispositif selon la revendication 5 ou 6, caractérisé en ce que les moyens de commutation (S₁, S₂) sont adaptés pour coupler les moyens d'excitation (E), les moyens de détection (14, 15, 16, 17) et les moyens générateurs du signal de correction au premier circuit de traitement pendant le démarrage du dispositif afin de régler les moyens de focalisation.

8. Dispositif selon la revendication 5, 6 ou 7, caractérisé en ce que les moyens de commutation (S₁, S₂) sont adaptés pour coupler les moyens d'excitation (E), les moyens de détection (14, 15, 16, 17) et les moyens générateurs du signal de correction alternativement aux premier et deuxième circuits de traitement.

9. Dispositif selon l'une ou plusieurs des revendications 4 à 8, caractérisé en ce que le rapport entre l'intervalle de marche et l'intervalle d'arrêt des premiers moyens de commutation (S₁) est égal ou supérieur à 0,05.
